# EUROPEAN PATENT APPLICATION

(11) **EP 2 096 549 A1**
(43) Date of publication of application: **02.09.2009**
(21) Application number: 08165039.2
(22) Date of filing: 24.09.2008
(51) Int. Cl.: G06F 13/14

(54) **Data transfer device**

(30) Priority: 28.02.2008 JP 2008048348
(71) Applicant: Fujitsu Limited, Kawasaki-shi, Kanagawa 211-8588 (JP)
(72) Inventor: Umezaki, Yasuyuki, Kawasaki-shi, Kanagawa 211-8588 (JP); Kawasoe, Nobuaki, Kawasaki-shi Kanagawa 211-8588 (JP); Ebeshu, Hidetaka, Kawasaki-shi Kanagawa 211-8588 (JP)
(74) Representative: Wilding, Frances Ward

(57) **Abstract**

A data transfer device for storing only transfer data for which updating is necessary in the storage unit (4) of a transfer source, transferring the transfer data by a transfer control unit (3), temporarily storing the transfer data in a register(8) provided in a transfer destination circuit (5), transferring the transfer data stored in the register to the discontinuous storage area of the transfer destination circuit (5) according to the map information of a map register(9), and transferring data for which updating is necessary to the transfer destination circuit(5).

## Description

### Background of the Invention

### Field of the Invention

The present invention relates to a data transfer device for transferring data to a discontinuous storage area.

### Description of the Related Art

While transferring data from a certain area to another area of memory, access control by a CPU or direct memory access (DMA) transfer is performed. In the access control by a CPU, the CPU reads data in the memory and transfers data specifying the address of a transfer destination. In this case, the load of a CPU is heavy. Therefore, when transferring data to the continuous area of memory, a DMA transfer is performed that is capable of transferring data at a high speed without occupying a CPU.

Generally, in the DMA transfer, data is read from the memory of its transfer source in units of prescribed transfer sizes and data is efficiently transferred by continuing the operation of writing the data into the transfer destination.

However, the hardware configurations of transfer destinations are not uniform. For example, some devices have individual control registers and some transfer destination addresses are discontinuous, and discontinuity depends on the hardware of a transfer destination. When a device operates while periodically updating a part of the register after its initial setting, its update position becomes a discontinuous storage area.

Conventionally, even when transferring data to a discontinuous storage area, it is necessary to transfer current data to an area where updating is not necessary. Therefore, since it is necessary to secure the area of a transfer source for data for which updating is not necessary and also since it is necessary to transfer the data for which updating is not necessary, an extra access cycle is necessary.

Laid-open Japanese Patent Application No. 07-262127 discloses a technique relating transferring data from a continuous area to a discontinuous area. This invention stores data in a transfer source and the address information of a transfer destination in pairs and then transfers the data.

However, in the technique of the above Laid-open Japanese Patent Application No. 07-262127, since it is necessary to store not only data to be transferred but also the address of a transfer destination, a large capacity of memory is necessary. Since it is also necessary to transfer the address data, it is necessary to transfer much data.

### Summary of the Invention

This is a data transfer device for reducing the amount of transfer data and efficiently transferring data when transferring data to a discontinuous storage area. When transferring data to a transfer destination circuit having a discontinuous storage area, the data transfer device stores only transfer data for which updating is necessary in a storage unit in a transfer source, transfers the transfer data by a transfer control unit, temporarily stores the transfer data in a register provided for the transfer destination circuit, and transfers the transfer data stored in the register to the discontinuous storage area of the transfer destination circuit on the basis of map information stored in a map register.

By such a configuration, a data transfer device capable of transferring only data for which updating is necessary to a transfer destination circuit can be provided, thus reducing the number of transfers and thereby realizing an efficient transfer process.

The map information stored in the map register is the address information of the discontinuous storage area of the transfer destination circuit and transfer data can be correctly transferred to a position specified by this address information.

Furthermore, the map information stored in the map register is flag information instructing the transfer of data to the discontinuous storage area of the transfer destination circuit, and the transfer data can then be transferred to the transfer destination circuit on the basis of this flag information.

### Brief Description of the Drawings

Preferred features of the present invention will now be described, purely by way of example, with reference to the accompanying drawings, in which:-
Fig. 1 is a circuit diagram showing the configuration of a hardware circuit in detail.
Fig. 2 shows the system configuration of a data transfer device according to an embodiment of the present invention.
Fig. 3 shows the procedures of a transfer process for one basic DMA transfer.
Fig. 4 shows the features of a DMA transfer device.
Fig. 5 is a perspective illustration showing a state in which data is DMA-transferred to registers A and B.
Fig. 6 shows that the area of each of the registers A and B is divided for each byte, with data (DATA_A) of 32 bits (one word) being stored in areas A1 to A3 of register A and data (DATA_B) being stored in areas B1 to B3 of register B.
Fig. 7 shows a configuration in the case where an assist circuit is used and shows that DMA-transferred data (DATA_A and DATA_B) of 32 bits (one word) is processed by the assist circuit 6 and is transferred to registers A and B.
Fig. 8 is a detailed circuit diagram of an access control circuit.
Fig. 9 shows a conventional data transfer process.
Fig. 10 shows the data transfer process of the present invention compared with Fig. 9.
Fig. 11 shows a variation of preferred embodiment 1.
Fig. 12 shows the configuration of the DMA transfer device in preferred embodiment 2.
Fig. 13 shows the map register in preferred embodiment 2.

### Description of the Preferred Embodiments

The preferred embodiments of the present invention are described below with reference to the drawings.

### (Preferred embodiment 1)

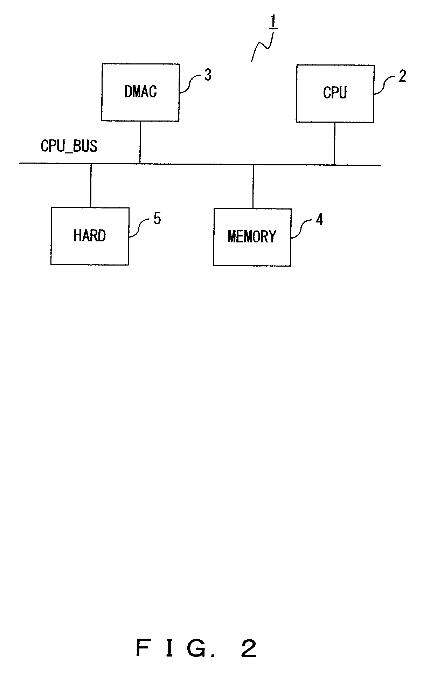

Fig. 2 shows the system configuration of a data transfer device according to the present invention. In Fig. 2, a data transfer device 1 comprises a CPU 2, a DMA controller (DMAC) 3, memory 4, and a hardware circuit (HARD) 5, and they are connected via a CPU bus. The CPU 2 instructs the DMA controller 3 to perform DMA transfer and the DMA controller 3 transfers data stored in the memory 4 of a transfer source to the hardware circuit 5 of a transfer destination in prescribed units of sizes.

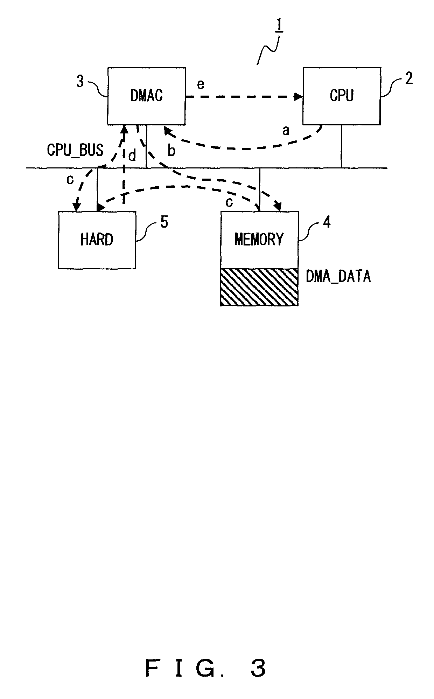

Fig. 3 shows the procedures of a transfer process for one basic DMA transfer. The CPU 2 firstly sets the DMA controller 3 to DMA transfer and starts DMA transfer (a shown in Fig. 3). Then, the DMA controller 3 accesses the memory 4 of a transfer source (b shown in Fig. 3), reads data of a prescribed size (for example, 32 bits (one word)) from the memory 4 and transfer the data to the hardware circuit 5 of a transfer destination directly or via the DMA controller 3 (c shown in Fig. 3).

Then, the hardware circuit 5 of a transfer destination requests the DMA controller 3 to transfer subsequent transfer data (d in Fig. 3) and repeats the above processes. Then, when the data transfer from the memory 4 is completed, the DMA controller 3 transmits the completion notice of the transfer process to the CPU 2 (e shown in Fig. 3).

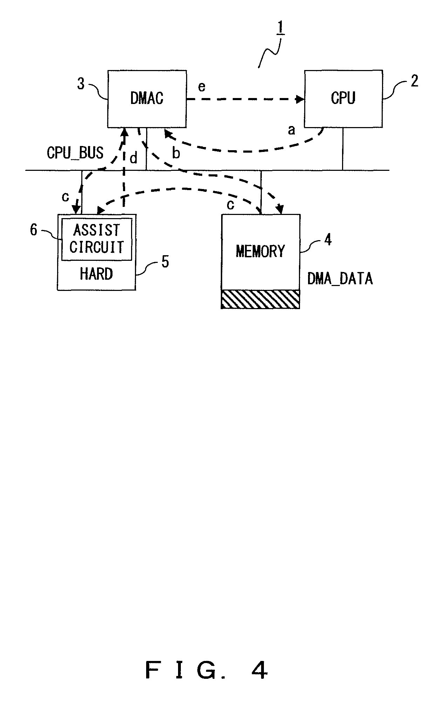

Fig. 4 shows the features of the DMA transfer device. Although the DMA transfer device basically has the same configuration as that of Fig. 3, its hardware circuit 5 comprises an assist circuit 6.

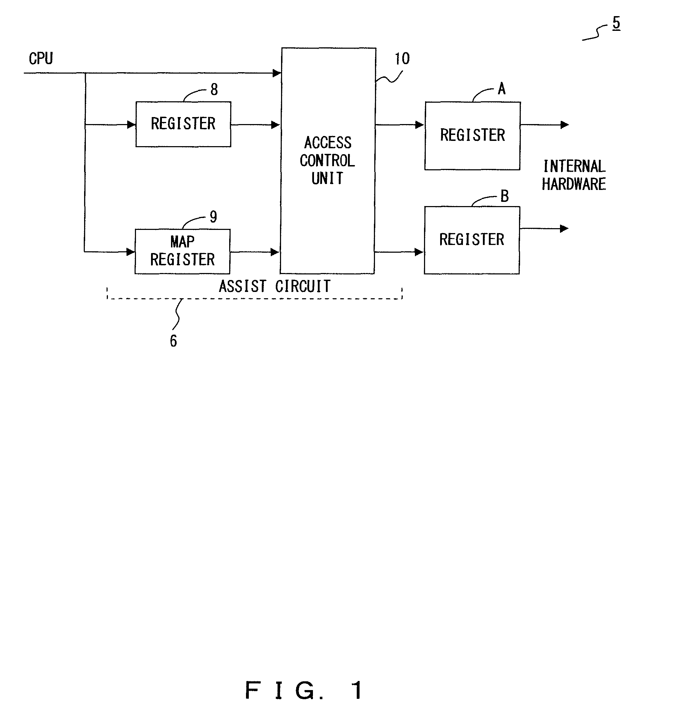

Fig. 1 shows the configuration of the hardware circuit 5; it comprises the assist circuit 6, registers A and B, and internal hardware; the internal hardware is not shown in Fig. 1. The assist circuit 6 comprises a register 8, a map register 9 and an access control unit 10. The registers A and B are conventionally provided and transfer data transferred to the hardware circuit 5 to the internal hardware.

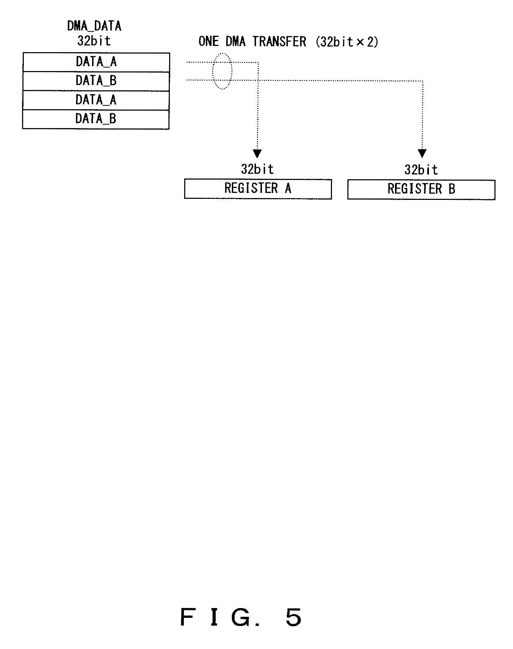

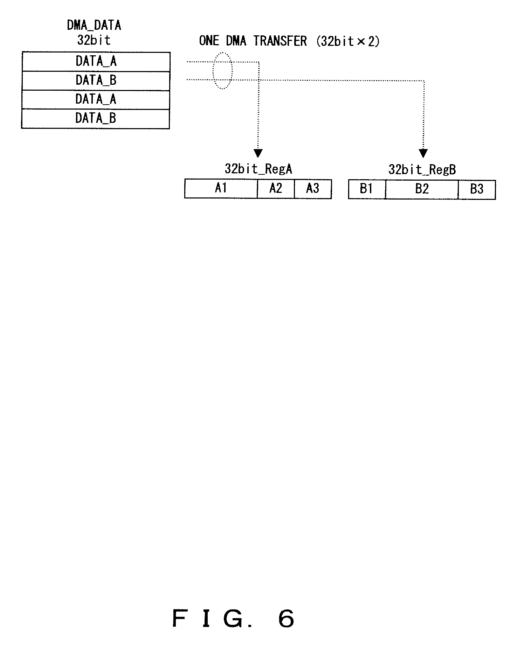

Fig. 5 is a perspective illustration showing a state in which data is DMA-transferred to registers A and B and shows that data (DATA_A and DATA_B) of 32 bits (one word) is transferred to registers A and B by one transfer process. Fig. 6 shows that the area of each of the registers A and B is divided for each byte, data (DATA_A) of 32 bits (one word) is stored in areas A1 to A3 of register A and data (DATA_B) is stored in areas B1 to B3 of register B. Each of the areas A1 and B2 is 2 bytes.

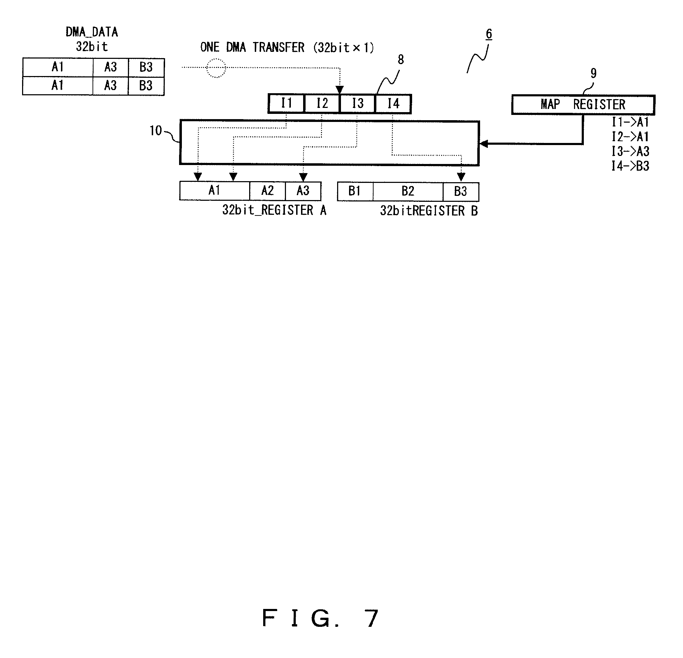

Fig. 7 shows a configuration in which the assist circuit 6 is further added to that of Fig. 6 and shows that data (DATA_A and DATA_B) of 32 bits (one word) DMA-transferred from the memory 4 is processed by the assist circuit 6 and is transferred to registers A and B. Specifically, data (DATA_A and DATA_B) are temporarily stored in register 8, is transmitted to the access control unit 10, and is transferred to areas A1 to A3 or areas B1 to B3 of corresponding registers A and B by the process of the access control unit 10 based on the map information of the map register 9.

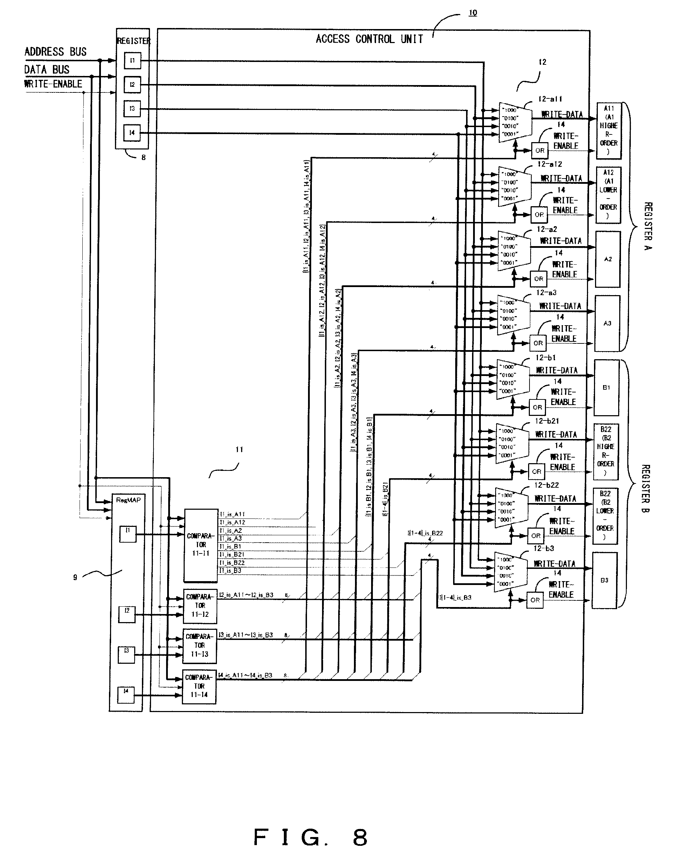

Fig. 8 is a detailed circuit configuration of the access control circuit 10. The access control unit 10 comprises a comparator 11 and a selector circuit 12, and performs control so as to transfer the data transferred to the register 8 to the registers A and B of transfer destinations on the basis of the information of the map register 9.

The comparator 11 comprises comparators 11-I1∼11-I4 corresponding to the I1∼14 of the registers 8 and determines to which register data transferred to the register 8 is addressed. For example, an address bus is connected to the comparator 11-I1 and a write-enable signal is input into the comparator 11-I1. Then, map information is input from the I1 of the map register 9. Thus, the comparator 11-I1 recognizes that data is transferred to the I1 of the register 8 and determines to which register of a transfer destination the data is transferred on the basis of the map information.

The address bus is also connected to the comparator 11-I2 and the write-enable signal is input into the comparator 11-I2. The comparator 11-I2 recognizes that data is transferred to the 12 of the register 8 and determines to which register of a transfer destination the data is transferred on the basis of the map information from the 12 of the map register 9. Similarly, an address bus is also connected to each of the comparators 11-I3 and 11-I4 and a write-enable signal is input into each of the comparators 11-I3 and 11-I4. Then, each of the comparators 11-I3 and 11-I4 recognize that data is transferred to the I3 or I4 of the register 8 and determines to which register of a transfer destination the data is transferred on the basis of the map information from the I3 or I4 of the map register 9.

The selector circuit 12 is provided for each of the registers A (A11, A12, A2 and A3) and the registers B (B1, B21, B22 and B3) and selects data transferred from the register 8. Specifically, the selector circuit 12 comprises eight selector circuits, 12-a11, 12-a12, 12-a2, 12-a3, 12-b1, 12-b21, 12-b22 and 12-b3, and transfers data transferred from the register 8 to the corresponding register A (A11, A12, A2 and A3) and register B (B1, B21, B22 and B3) according to determination signals output from the comparators 11-I1∼I4. In this case, the determination signals output from the comparators 11-I1∼I4 are output as "I1(∼I4)_is_A11(A12∼B3)" for each register of a transfer destination to be selected.

The write-enable signals output via the comparators 11-11∼14 are supplied to the corresponding registers A (A11, A12, A2 and A3) and registers B (B1, B21, B22 and B3) via an OR gate 14 in order to instruct the writing of data into the registers.

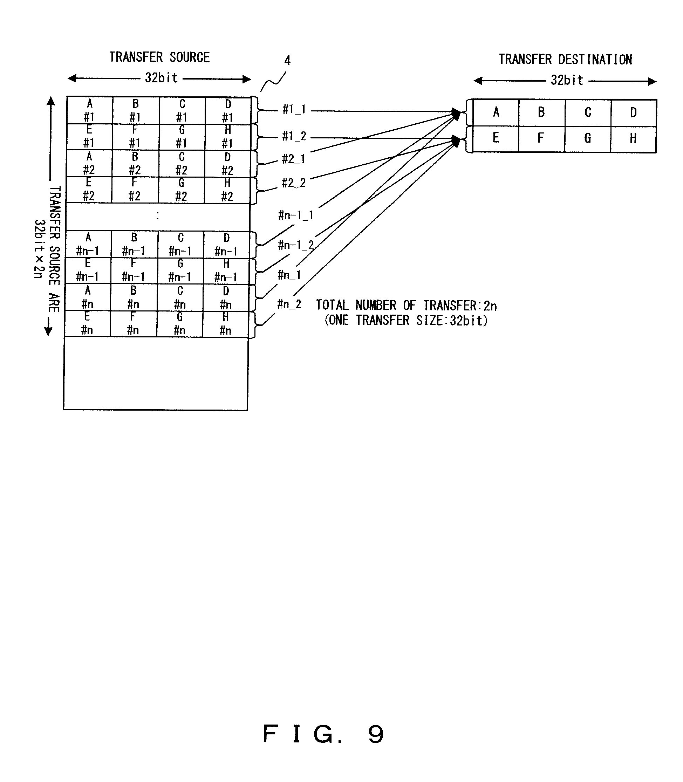

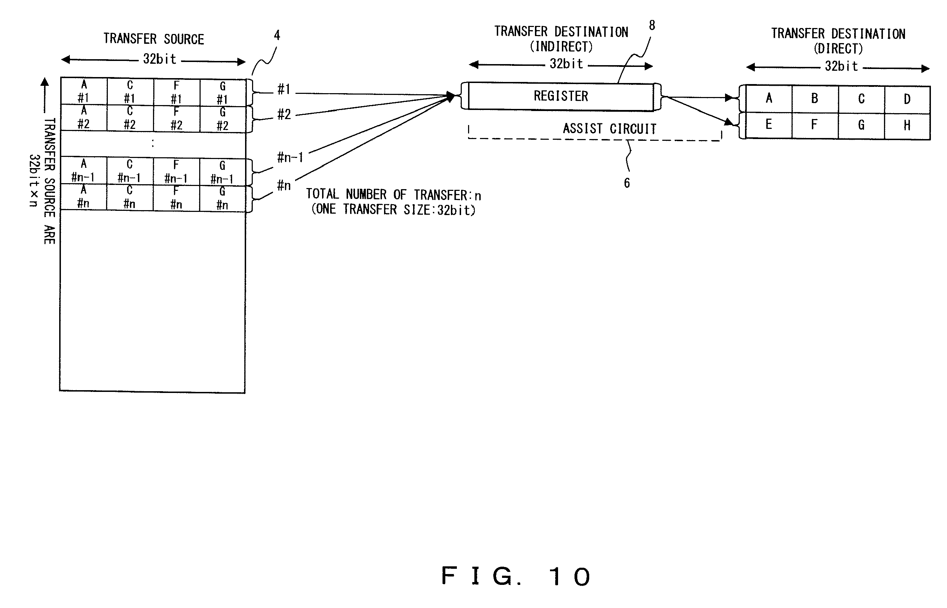

Figs. 9 and 10 compare the data transfer process of the present invention with a conventional one. Fig. 9 shows a conventional data transfer process.

Fig. 10 shows the data transfer process of embodiments of the present invention.

In the case of the conventional data transfer process shown in Fig. 9, 2n (#1_1∼#∼_n, and #2_1∼#2_n) pieces of data A (#1) ∼ D (#1) and E (#1) ∼H (#1) of one word (32 bits) are stored in the memory 4 and are transferred to the registers A and B of transfer destinations one word by one word. Therefore, conventionally, since data A∼D and data E∼H are transferred one word by one word, it takes 2n transfer processes to transfer all data (32 bits (one word) × 2n) stored in the memory 4.

However, in the embodiment, as shown in Fig. 10, data to be continuously transferred is A,C,F and G and the other data B, D and H does not need to be update. In embodiments of the present invention, only data A, C, F and G for which updating is necessary are transferred. As a case where the data transfer device of the present invention is applied, a sound generator is described below. In this case, the frequency and width of a tone pulse corresponds to the data for which updating is necessary and the number of cycles and the amount of increase/decrease corresponds to data for which updating is unnecessary.

Although Fig. 10 shows only the configuration of the register 8; more specifically it includes the configuration of the assist circuit 6 shown in Fig. 1, and the data A, C, F and G for which updating is necessary is sequentially transferred from the memory 4 to the register 8 having a 32-bit configuration. Therefore, all data for which updating is necessary is transferred by one data transfer. Thus, in the case of embodiments of the present invention, the number of data transfers can be halved compared with the conventional case. The storage capacity of the memory 4 can also be reduced compared with the conventional case.

The detailed transfer process is described below with reference to Figs. 7 and 8. In both cases, data A1∼A3 and B1∼B3 are transferred to the hardware circuit 5 and of this data, data A2, B1 and B2 are data for which updating is unnecessary and data to be transferred (for which updating is necessary) include A1, A3 and B3 (however, A1 is 16 bits (2 bytes)). Therefore, data that must actually be transferred in the embodiment is data A1 (2 bytes), A3 (one byte) and B3 (one byte).

As described earlier, the DMA controller 3 starts DMA transfer from the memory 4 according to an instruction from the CPU 2. Then, as described above, data A1, A3 and B3 for which updating is necessary is transferred to the register 8. In this case, the higher-order 8 bits of data A1 is transferred to the 11 of the register 8 and the lower-order 8 bits of the same data A1 is transferred to the 12 of the register 8. Data A3 and B3 is transferred to the 13 and 14, respectively, of the register 8.

Then, as described above, an address bus is connected to the comparator 11-I1 and map information is output from a corresponding map register 9-11. The comparator 11-I1 recognizes that data is transferred to the 11 of the register 8 and determines to which register of a transfer destination data is transferred. In this case, the comparator 11-I1 determines that the data transferred to the 11 of the register 8 should be transferred to the register A (A11) and outputs a determination signal of "11_is_A11".

However, an address bus is connected to the comparator 11-I2 and map information is output from a corresponding map register 9-12. The comparator 11-I2 recognizes that data is transferred to the 12 of the register 8 and determines that the data transferred to the 12 of the register 8 should be transferred to register A (A12) and outputs a determination signal of "12_is_A12".

Furthermore, similarly, the comparators 11-I3 and 11-I4 receive map information from corresponding map registers 9-13 and 9-14, determine that the data transferred to the 13 and 14 of the register 8 should be transferred to register A (A3) and register B (B3), and output determination signals of "13_is_A3" and "14_is_B3", respectively.

The selector circuit 12-a11 that is supplied with the above signal selects the data of the higher-order 8 bits of A1 transferred from the 11 of the register 8 and outputs the data to the register A (A11) of a transfer destination. The selector circuit 12-a12 that is supplied with the above signal selects the data of the lower-order 8 bits of A1 transferred from the 11 of the register 8 and outputs the data to the register A (A12) of a transfer destination.

The selector circuit 12-a3 selects the data of the 8 bits of A3 transferred from the 13 of the register 8 and outputs the data to the register A (A3) of a transfer destination. Furthermore, the selector circuit 12-b3 selects the data of the 8 bits of B3 transferred from the 14 of the register 8 and outputs the data to the register B (B3) of a transfer destination.

However, since the selector circuits 12-a2, 12-b1, 12-b21 and 12-b22 are not selected by the comparator 11, they output no transfer data. Therefore, the data of corresponding registers A (A2) and B (B1, B21 and B22) are updated and are used, for example, in the internal hardware of a transfer destination.

Thus, the number of transfers can be reduced and further it is sufficient to store only data for update in which updating is necessary in the memory of a transfer destination, thereby reduce memory capacity.

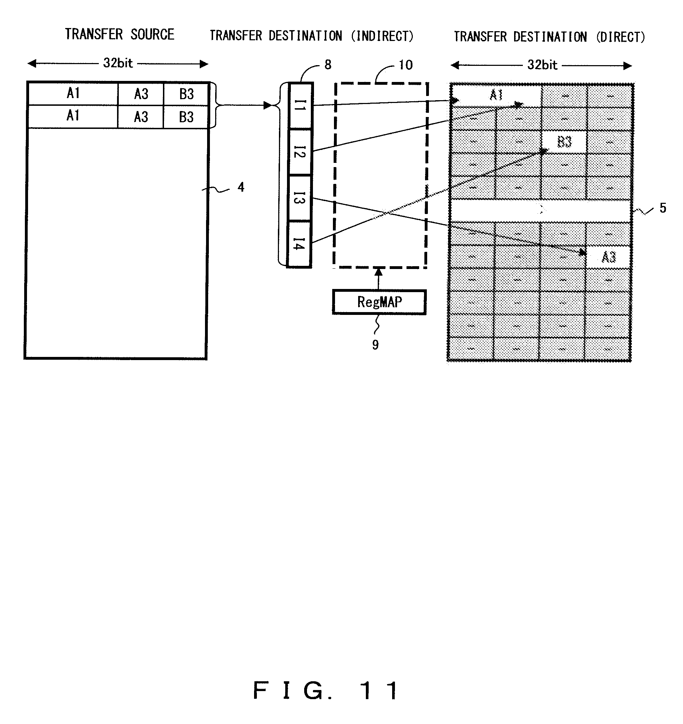

Fig. 11 shows a variation of preferred embodiment 1. Similarly as described earlier, embodiment 1 has a configuration of transferring the update data of A1, A3 and B3 from the memory 4 of a transfer source to the hardware circuit 5 of a transfer destination and performs DMA transfer using the register 8, map register 9, and access control unit 10 of the embodiment.

However, in this case, the hardware circuit 5 of the transfer destination is neither register A nor B and is a hardware circuit having a memory configuration, and the addresses to which the update data A1, A3 and B3 are transferred are also scattered in the memory. Even in such a case, according to the embodiment, by enabling the map register 9 to obtain in advance the address information of a transfer destination as map information, the data of A1, A3 and B3 transferred to the register 8 can be transferred to corresponding memory positions by the circuit process of the access control unit 10.

### (Preferred embodiment 2)

Next, the preferred embodiment 2 is described below.

Although in the above preferred embodiment 1 data is transferred to the register or memory of a transfer destination according to address information, in this preferred embodiment data can be DMA-transferred to a discontinuous transfer area by applying a flag setting to the map register 9.

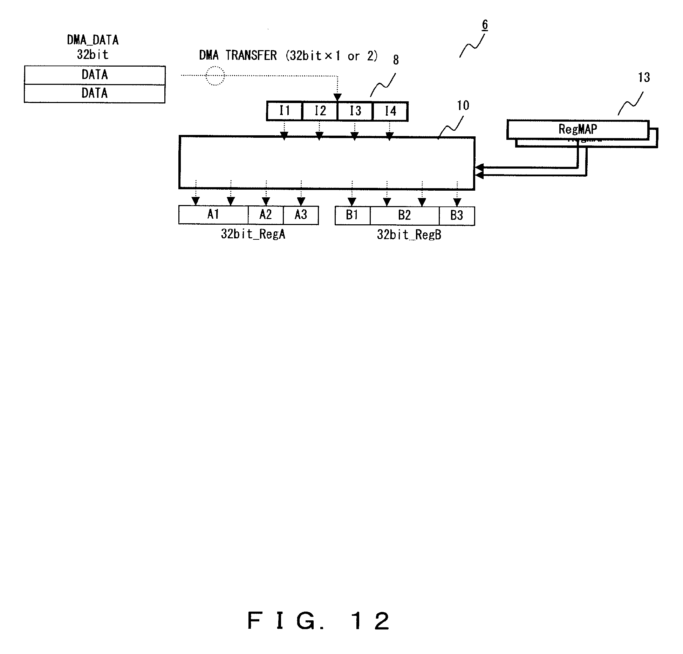

Fig. 12 shows the configuration of the access control unit 10 of the data transfer device in this preferred embodiment. In this case, the system configuration of the entire data transfer device is the same as that shown in Fig. 4.

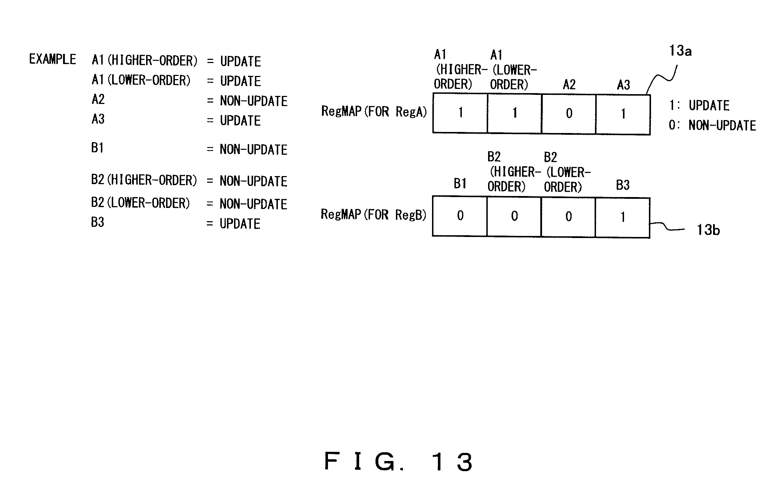

In this preferred embodiment as well, the hardware circuit 5 comprises the assist circuit 6 and the data transfer device also comprises the register 8, a map register 13, and the access control unit 10. However, in this preferred embodiment, the configuration of the map register 13 differs from that of the above preferred embodiment 1 and comprises two map registers 13a and 13b. Each of these map registers 13a and 13b has the configuration shown in Fig. 13 and comprises a flag area.

In this preferred embodiment, a flag for specifying the update/non-update status of data transferred to the register A (A11, A12, A2 and A3) and a flag for specifying the update/non-update status of data transferred to the register B (B1, B21, B22 and B3), for example, is in the map registers 13a and 13b, respectively. In this case, in the above example, as shown in Fig. 13, flags of "1101" and "0001" are set in the map registers 13a and 13b, respectively.

Thus, data to be transferred is determined by flag information set in the map registers 13a and 13b, and the number of data transfers to the register 8 can be determined by the number of flags to be updated that are set in the register 8.

For example, in the above example of a flag setting, data to be updated is data in which flag "1" is set in the map registers 13a and 13b and, for the number of data transfers to the register 8, if the number of settings of flag "1" is 1∼4, the number of data transfers is n and if the number of settings of flag "1" is 5∼8, it is 2n.

Therefore, if the data to be updated is 4 bytes or less, the number of data transfers, which is conventionally 2n, can be halved to n. In the above example, since the number of settings of flag "1" is 4 and the number of settings of flag "1" is 1∼4, the number of data transfers, which is conventionally 2n, can be halved to n.

Transfer positions to the register 8 can be obtained by sequentially mapping data in which flag "1" is set in the map register 13. For example, in the above example, data A11 in which flag "1" is set is mapped to the first 11 of the register 8, then data A12 in which flag "1" is set is mapped to the subsequent 12 of the register 8, and further data A3 in which flag "1" is set is mapped to the subsequent 13 of the register 8 and lastly data B3 in which flag "1" is set is mapped to the last 14 of the register 8.

Even when the configuration is other than the above, the flag settings of the map registers 13a and 13b differ from those shown in Fig. 13. By sequentially mapping data to the register 8 in which flag "1" is set, for example, toward the left end transfer positions, data for which updating is necessary can be transferred to the specified area of the hardware circuit 5.

Thus, the data of A11, A12, A3 and B3 that are read from the memory 4 are transferred to each mapped position of the register 8. The number of transfers is also specified by the above setting, and if data to be updated is 4 bytes or less, it can be reduced to half of the conventional number of data transfers.

As in the above, the preferred embodiment 1, since it is sufficient to store only data for which updating is necessary in the memory 4 of a transfer source, the memory capacity can be reduced.

Although in preferred embodiments 1 and 2, an example of the transfer of data having a configuration of one word (32 bits) is described, transfer data is not limited to the above configuration.

Although in the above descriptions data A11, A12, A3 and B3 are described as data to be continuously transferred, other data can also be transferred.

Although in this preferred embodiment, DMA transfer using a DMA controller (DMAC) is described as data transfer to a discontinuous storage area, it can also be data transfer under the access control of a CPU.

Furthermore, although in this preferred embodiment the register 8 temporarily stores transfer data, it can also be an address area having no function to store data.

As described above, according to embodiments of the present invention, by transferring only data for which updating is necessary from a transfer source to a transfer destination circuit, both the amount of data to be transferred and the number of transfers can be reduced, thereby realizing an efficient transfer process and also reducing the storage capacity needed for storing transfer data of a transfer source.

In any of the above aspects, the various features may be implemented in hardware, or as software modules running on one ore more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A data transfer device, comprising:
a storage unit(4) for storing data to be transferred to a discontinuous storage area;
a transfer control unit (3) for transferring the transfer data from the storage unit to a transfer destination circuit;
a register (8) for temporarily storing the transfer data;
a map register(9) for storing map information when transferring the transfer data to a transfer destination circuit having a discontinuous storage area; and
an access control unit (3) for transferring transfer data stored in the register to a discontinuous storage area of the transfer destination circuit according to the map information.

2. The data transfer device according to claim 1, wherein
the register(8), the map register(9), and the access control unit(3) are provided in the transfer destination circuit.

3. The data transfer device according to claim 1 or 2, wherein
update data is transferred in a discontinuous storage area of the transfer destination circuit(5).

4. The data transfer device according to any of claims 1 to 3, wherein
map information stored in the map register(9) is address information of a discontinuous storage area of the transfer destination circuit(5).

5. The data transfer device according to any of claims 1 to 3, wherein
map information stored in the map register(9) is flag information for instructing to transfer data to a discontinuous storage area of the transfer destination circuit(5).

6. The data transfer device according to claim 5, wherein
the flag information includes flag information for instructing not to transfer data to a storage area other than the discontinuous storage area.

7. The data transfer device according to any of claims 1 to 6, wherein
the access control unit (3) comprises a comparator circuit and a selector circuit.

8. The data transfer device according to claim 7, wherein
the comparator circuit generates a determination signal for transferring data transferred to the register(8) to the discontinuous storage area according to map information from the map register(9).

9. The data transfer device according to claim 8, wherein
the selector circuit transfers data transferred to the register(8) to the discontinuous storage area according to a determination signal from the comparator circuit.

10. The data transfer device according to any of claims 1 to 9, wherein
the discontinuous storage area is a register provided in a transfer destination circuit.

11. The data transfer device according to claim 10, wherein
the map register(9) is provided in relation to a register(8) of the transfer destination circuit and the map register stores flag information.

12. The data transfer device according to any of claims 1 to 11, wherein
the data transferred from the storage unit to a transfer destination circuit (5) is transferred via the transfer control circuit.

13. A data transfer method, comprising:
transferring the transfer data from a storage unit storing transfer data to a discontinuous storage area to a transfer destination circuit(5);
temporarily storing the transfer data in a register(8); and
transferring the transfer data stored in the register to a discontinuous storage area of the transfer destination circuit (5) according to map information when transferring the data to a transfer destination circuit(5) having a discontinuous storage area.
